# EUROPEAN PATENT APPLICATION

(11) **EP 1 976 221 A2**
(43) Date of publication of application: **01.10.2008**
(21) Application number: 08003721.1
(22) Date of filing: 28.02.2008
(51) Int. Cl.: H04L 29/06

(54) **Information processing device, network system and method and computer program therefor**

(30) Priority: 29.03.2007 JP 2007088706
(71) Applicant: Brother Kogyo Kabushiki Kaisha, Nagoya-shi, Aichi-ken 467-8561 (JP)
(72) Inventor: Shirai, Takaaki, Nagoya Aichi 467-8562 (JP)
(74) Representative: Kuhnen & Wacker

(57) **Abstract**

An information processing device, which is connectable with a data storage device and data management device, includes a data dividing means configured to divide a first data file into a plurality of second data files, a management information creating means configured to create management information regarding the plurality of second data files, a data storing means configured to store the plurality of second data files into the data storage device, and a management information storing means configured to store the management information created by the management information creating means into the data management device.

## Description

### Cross-Reference to Related Application

This application claims priority from Japanese Patent Application No. 2007-088706 filed on March 29, 2007. The entire subject matter of the application is incorporated herein by reference.

### Technical Field

The following description relates to one or more information processing devices, accessible from a terminal device via a network, which make it possible to provide acquired data to the terminal device with high confidentiality.

### Background

Conventionally, there has been known a facsimile machine configured to transfer received image data to a server (for example, see Japanese Patent Provisional Publication No. HEI 11-275293, hereinafter which is simply referred to as '293 Publication). The facsimile machine can perform a printing operation based on image data stored in the server by an instruction issued by a client accessible to the server.

### Summary

However, according to the technique disclosed in '293 Publication, any client communicable with the server can access the image data as once stored in the server. Hence, since there might be caused an unfavorable situation that an unauthorized client accidentally accesses the image data stored in the server, sufficient confidentiality is not assured for the image data.

Aspects of the present invention are advantageous in that there can be provided one or more improved information processing devices, network systems, and computer readable media each of which makes it possible to provide acquired data to a terminal device communicable with the information processing device with keeping higher confidentiality.

According to aspects of the present invention, there is provided an information processing device connectable with a data storage device and data management device, which information processing device includes a data dividing means configured to divide a first data file into a plurality of second data files, a management information creating means configured to create management information regarding the plurality of second data files, a data storing means configured to store the plurality of second data files into the data storage device, and a management information storing means configured to store the management information created by the management information creating means into the data management device.

In some aspects of the present invention, the first data file is divided into the plurality of second data files by the data dividing means. The plurality of second data files are stored into the data storage device, and the management information regarding the plurality of second data files is stored into the data management device. Therefore, even though an unauthorized user accidentally accesses part of the plurality of second data files stored in the data storage device, the unauthorized user cannot grasp what the first data file is only with the part of the plurality of second data files. Hence, the confidentiality of the first data file can be made higher.

According to another aspect of the present invention, there is provided a network system, which includes an information processing device, a data storage device connected with the information processing device, a data management device connected with the information processing device, and a terminal device connected with the information processing device via a network. The information processing device includes a data dividing means configured to divide a first data file into a plurality of second data files, a management information creating means configured to create management information regarding the plurality of second data files, a data storing means configured to store the plurality of second data files into the data storage device, and a management information storing means configured to store the management information created by the management information creating means into the data management device.

With the network system configured as above, the same effects as the aforementioned information processing device can be provided.

According to a further aspect of the present invention, there is provided a method applicable to an information processing device, which includes a first step of dividing a first data file into a plurality of second data files, a second step of creating management information regarding the plurality of second data files generated in the first step, a third step of storing the plurality of second data files into the data storage device, and a fourth step of storing the management information created in the second step into the data management device.

In addition, according to a further aspect of the present invention, there is provided a computer program to be executed by a computer, the computer program containing instructions that cause the computer to perform the aforementioned method.

With the method or computer program configured as above, the same effects as the aforementioned information processing device and network system can be provided.

### Brief Description of the Accompanying Drawings

Fig. 1 is a block diagram schematically showing a network system established on a network in an embodiment according to one or more aspects of the present invention.

Fig. 2 schematically shows an operation selecting screen image in the embodiment according to one or more aspects of the present invention.

Fig. 3 schematically shows a data management setting screen image in the embodiment according to one or more aspects of the present invention.

Fig. 4 schematically shows a data management setting screen image for setting a destination to store divided data files in the embodiment according to one or more aspects of the present invention.

Fig. 5 schematically shows a data management setting screen image for respective division rates of the divided data files in the embodiment according to one or more aspects of the present invention.

Fig. 6 schematically shows a data management setting screen image for configuring a setting for a compressing process in the embodiment according to one or more aspects of the present invention.

Fig. 7 schematically shows a data management setting screen image for setting authorization levels in the embodiment according to one or more aspects of the present invention.

Fig. 8 schematically shows a data management setting screen image for setting a destination to store data management information in the embodiment according to one or more aspects of the present invention.

Fig. 9 is an example of data management information in the embodiment according to one or more aspects of the present invention.

Fig. 10 schematically exemplifies how the divided data files are transferred and stored in the network system in the embodiment according to one or more aspects of the present invention.

Fig. 11 schematically shows a database to save the data management information in the embodiment according to one or more aspects of the present invention.

Fig. 12 schematically exemplifies how the divided data files are transferred and stored in the network system in the embodiment according to one or more aspects of the present invention.

Fig. 13 schematically exemplifies how an original data file is restored with the divided data files in the network system in the embodiment according to one or more aspects of the present invention.

Fig. 14 schematically shows a deletion screen image in the embodiment according to one or more aspects of the present invention.

Fig. 15 is a flowchart showing a process to be executed with a data transfer program in the embodiment according to one or more aspects of the present invention.

Fig. 16 is a flowchart showing a process to be executed with a permanent setting program in the embodiment according to one or more aspects of the present invention.

Fig. 17 is a flowchart showing a process to be executed with a data restoring program in the embodiment according to one or more aspects of the present invention.

### Detailed Description

It is noted that various connections are set forth between elements in the following description. It is noted that these connections in general and, unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

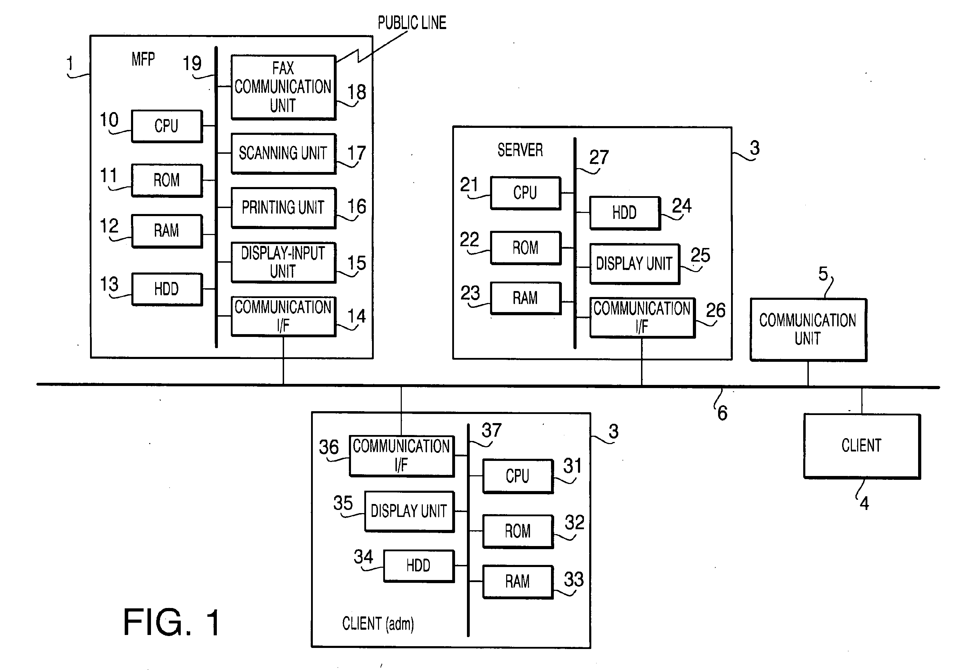

Hereinafter, an embodiment according to aspects of the invention will be described with reference to the accompanying drawings. Fig. 1 is a block diagram of a network system established on a network in the embodiment. In the network system, a multi function peripherals (MFP) 1, a server 2 that performs various information processing, and a plurality of clients 3 and 4 are interconnected on a LAN 6 as a communication network. Further, the network system is connected with an Internet via a communication unit 5 so as to perform data communication with external devise.

The MFP 1 has various functions such as a printer, scanner, copy machine, and facsimile machine. The MFP 1 is provided with a ROM 11 that stores thereon a control program, RAM 12 that temporarily stores thereon data under processing, hard disk drive (HDD) 13 that stores thereon data, and communication interface 14 for connecting the MFP 1 with a network. In addition, the MFP 1 is provided with a display-input unit 15 that includes buttons (e.g., a numeric keypad) and a touch-panel-type screen, printing unit 16 that performs a printing operation, scanning unit 17 that optically scans a picture or image, and facsimile communication unit 18 that performs facsimile communication with another device via a public line.

Further, the MFP 1 is provided with a control unit (CPU) 10 that controls the aforementioned elements such as the ROM 11, RAM 12, HDD 13, communication interface 14, display-input unit 15, printing unit 16, and scanning unit 17, which are connected via a system bus. Further, data transfer program in the present embodiment is stored in the ROM 11. The MFP 1 serves as a data transfer device in the present embodiment. For example, image data such as a picture and/or image scanned by the scanning unit 17 are transferred to the server 2 to be saved therein.

The server 2 is a widely known PC provided with a CPU 21, ROM 22, RAM 23, hard disk drive (HDD) 24, display unit 25, and communication interface 26, which are interconnected via a system bus 27. The server 2 is connected with the LAN 6 via the communication interface 26. The server 4 is configured to store data transferred from the MFP 1 and clients 4 and 5 in the HDD 24 with a large storage capacity. Further, the server 2 is an FTP (File Transfer Protocol) server, and data stored in a data management folder can be downloaded into the client 3 or 4 based on the file transfer protocol on a file-by-file basis.

The client 3 (as well as client 4) is provided with a CPU 31, ROM 32, RAM 33, hard disk drive (HDD) 34, display unit 35, and communication interface 36, which are interconnected via a system bus 37. In addition, the client 3 is connected with the network 6 via the communication interface 36. With various application programs being installed in the ROM 32 and executed by the CPU 31, various functions can be attained. Therefore, with the data transfer program of the present embodiment stored in the ROM 32, the client 3 can serve as a data transfer device. It is noted that the client 3 is a PC authorized as an administrator while the client 4 is not authorized, though their configurations have no difference.

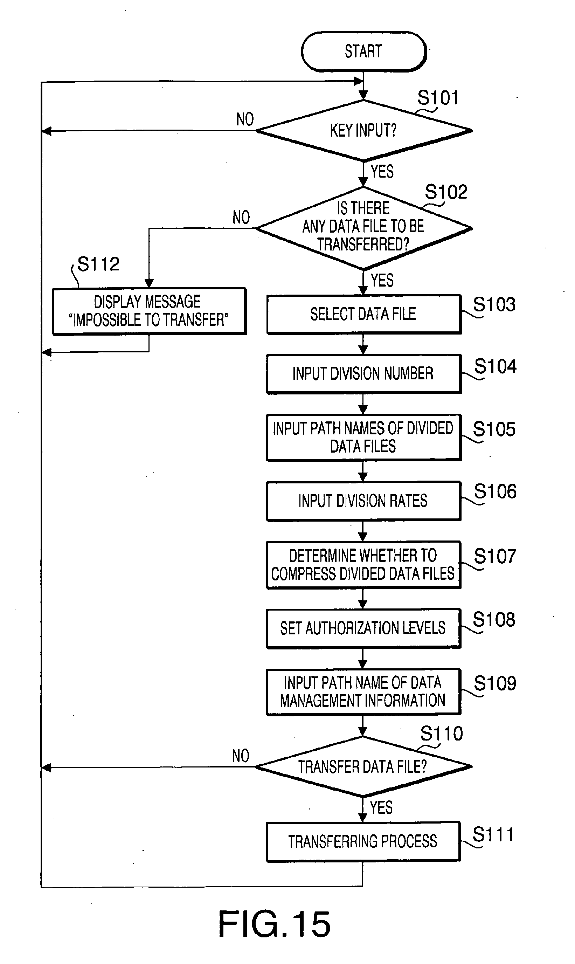

Data dealt with by the MFP 1, for example, include image data scanned by the scanning unit 17, image data received by the facsimile communication unit 18, and text data received from the client 3 or 4 via the communication interface 14, which are all subjects to be transferred. Hereinafter, there will given an explanation regarding image data scanned by the scanning unit 17. Fig. 15 is a flowchart showing a process to be executed with the data transfer program. A procedure until the data file is transferred will be described in accordance with the flowchart.

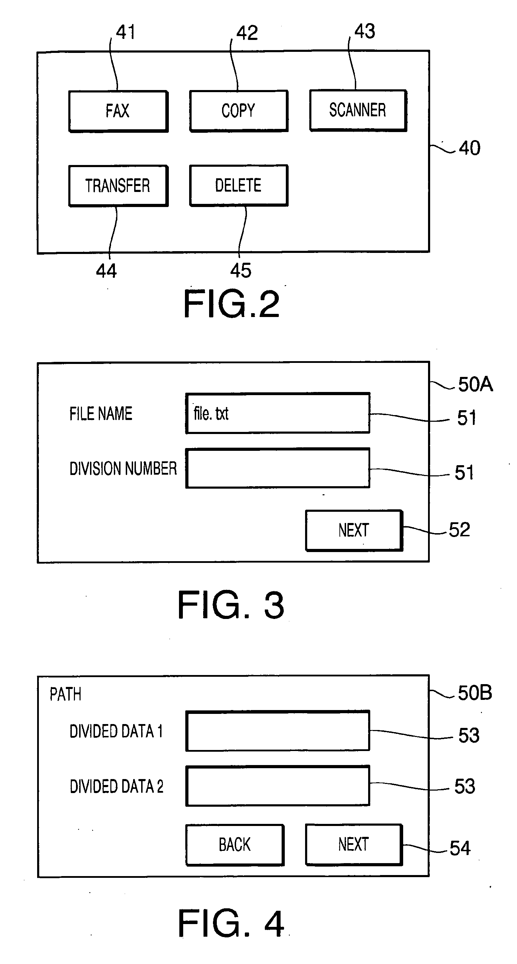

In the MFP 1, for example, an operation selecting screen image 40 as shown in Fig. 2 is displayed on the display-input unit 15. Therefore, when a user wishes to perform a predetermined operation, the user can make it by pressing a corresponding button. Options (buttons) to be selected include "FAX" 41, "COPY" 42, "SCANNER" 43, "TRANSFER" 44, and "DELETE" 45. In the present embodiment, firstly, the "SCANNER" 43 is selected on the operation selecting screen image 40 configured as a touch panel. Then, a "Start" key (not shown) is pressed to launch the scanning operation by the scanning unit 17. When the scanned image data are to be transferred to and stored in a predetermined destination, the "TRANSFER" 44 is pressed (S101: Yes). Thereby, the image data is transferred to and stored in the destination. Meanwhile, unless the "TRANSFER" 44 is pressed (S101: No), the scanned image data are stored in the HDD 13 of the MFP 1, and the operation of checking whether the "TRANSFER" 44 is pressed is repeated in S101.

In the MFP 1 in execution of the transfer operation, it is checked whether the data file to be transferred is stored therein (S102). When it is not judged that the data file to be transferred is stored therein (S102: No), a display "Impossible to Transfer" is indicated on the display-input unit 15 (S 112). Meanwhile, when it is judged that the data file to be transferred is stored therein (S102: Yes), files stored therein are shown on the display-input unit 15 in a list form (not shown). The data file to be transferred is selected from the files shown in a list form (S103). Thereby, the display on the display-input unit 15 is switched to a data management setting screen image 50A as shown in Fig. 3. Then, data management information is created through the following operations.

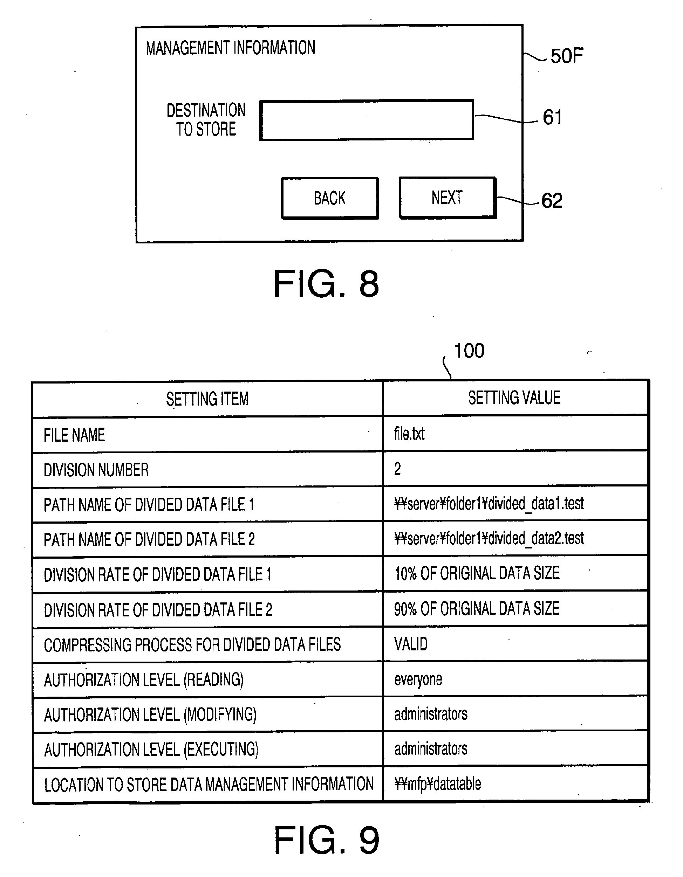

Fig. 9 shows an example of the data management information 100, which is configured through operations on the data management setting screen images 50A to 50F shown in Figs. 3 to 8, respectively. As understood from the data management information 100, in the present embodiment, a single data file is divided into two or more data files, and the files are stored in respective different storage areas. On each of the data management setting screen images 50A to 50F, there is displayed a corresponding one of setting items of the data management information 100. Then, when a predetermined input is given on an input box in accordance with the setting item displayed on each of the screen images 50A to 50F, the data management information 100 shown in Fig. 9 is created.

On the data management setting screen image 50A, when one of the files shown in the list form is selected, a file name "file.txt" of the selected file is automatically inputted. Then, a division number representing into how many files the data file is divided is inputted into an input box 51 corresponding to a setting item of the division number (S104). Thus, the file name and division number of the data file to be transferred are configured.

In the present embodiment, as shown in Fig. 9, a division number of "2" is set. It is noted that a division number of "1" is inputted into the input box 51 when the data file is not divided. Further, the data file can be divided into more than two files with a division number more than "2" being inputted. Accordingly, the data file is divided into files of a division number as configured, each divided file is transferred to and stored in a different storage area.

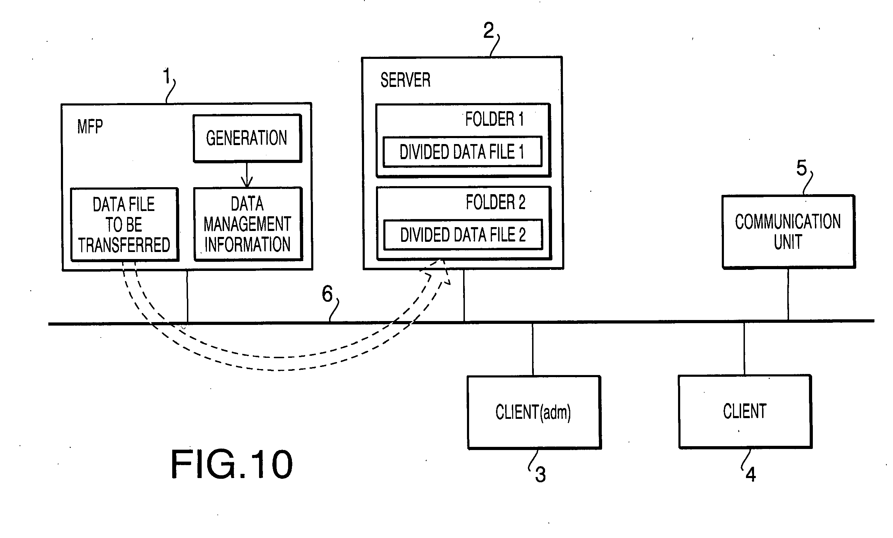

In the meantime, Fig. 10 schematically shows how the divided data files are transferred and stored in the network system of the present embodiment. Here, a data file acquired by the MFP 1 is transferred in a form divided into two files to the server 2, and stored in the HDD 24 (see Fig. 1). After the setting inputs of the file name and division number are completed on the data management setting screen image 50A, by pressing a button 52, the display is switched to the subsequent data management setting screen 50B as shown in Fig. 4. Then, on the data management setting screen image 50B, storage areas for the divided data files are inputted.

Specifically, there are inputted into respective input boxes 53 corresponding to the divided data files 1 and 2, character strings (path names) representing locations of respective data management folders in which the divided data files 1 and 2 are stored (S105). Thereby, different storage areas for the two divided data files are set as path names for the divided data files 1 and 2 as shown in the data management information 100 of Fig. 9. For example, a path name "¥¥server¥folder1¥divided_data_file_1.test" is assigned to the divided data file 1. The front half portion of the path name "¥¥server¥folder1¥" represents the data management folder in which the data file specified by the rear half portion of the path name "divided_data_file_1.test" is stored. In case of the divided data file 2, a front half portion of a path name "¥¥server¥folder2¥" represents the data management folder in which the data file specified by a rear half portion of the path name "divided_data_file_2.test" is stored.

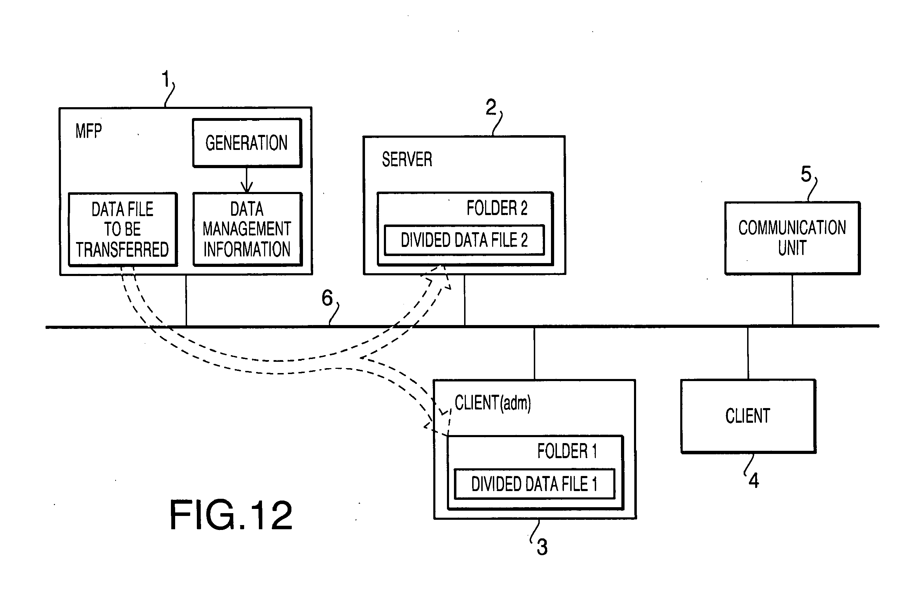

Thus, by configuring the path names, as shown in Fig. 10, the divided data files 1 and 2 are stored in the data management folders 1 and 2 generated in the server 2, respectively. Here, although the storage areas for the division data files 1 and 2 are provided in the same server 2, storage areas for divided data files can arbitrarily be set. Hence, a plurality of divided data files may be stored in different information processing devices in the network, respectively. For example, as shown in Fig. 12, one of the two divided data files may be stored in the server 2, while the other may be stored in the client 3 of the administrator. Further, one of the two divided data files may be stored in the MFP 1, while the other may be stored in the server 2. In this case, a path name for the MFP 1 may, for example, be set as "¥¥mfp¥folder1¥," and a path name for the client 3 may be set as "¥¥adm¥folder2¥."

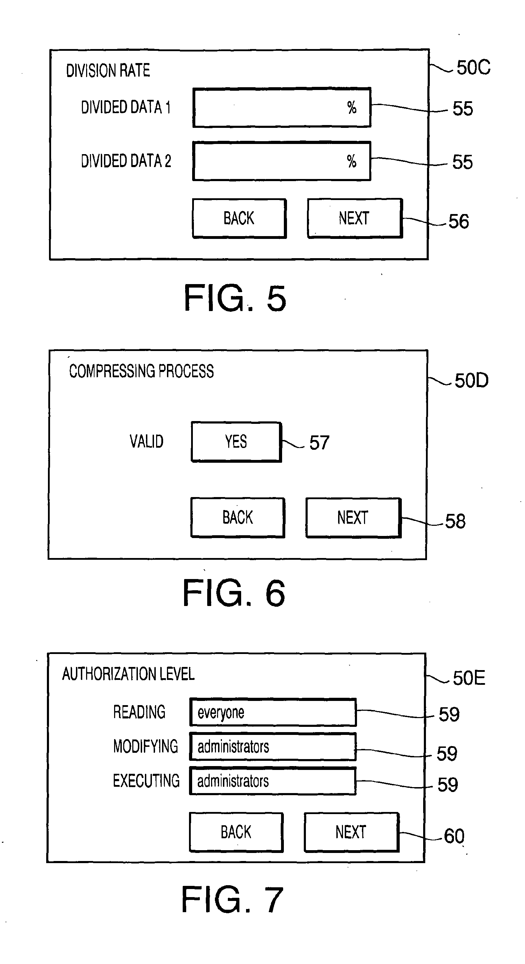

In the meantime, when there is configured in this manner such a setting that a data file is stored in a device other than the server 2, a storage capacity of the MFP 1 or client 3 might not be sufficient for the data file with an enormous data amount being stored therein. Therefore, it is favorable that a data file with a large capacity is allocated into the server 2. In the present embodiment, the data file to be transferred can be divided not only evenly but also at an arbitrarily configured division rate. Specifically, when a button 54 is pressed after the setting inputs of the path names are completed on the data management setting screen image 50B, the present screen image is switched to the next data management setting screen image 50C for setting a division rate as shown in Fig. 5.

On the data management setting screen image 50C, there are inputted into respective input boxes 55, numerical values as the division rates of the divided data files 1 and 2 for the original data file. It is noted that the two boxes 55 are displayed on the data management setting screen image 50C as input areas in which respective setting items (division rates) are inputted for the two divided data files 1 and 2. However, the number of the input boxes 55 varies depending on the division number. In S106, respective division rates of the two divided data files are inputted into the corresponding input boxes S5.

Here, the divided data file 1 has a division rate of 10 % of a data size of the original data file, while the divided data file 2 has a division rate of 90 % of the data size of the original data file. Therefore, numerical values "10" and "90" are inputted into the input boxes 55 on the data management setting screen image 50C, and then a button 56 is pressed. It is noted that an error message is displayed on the screen image 50C unless the sum of the division rates as inputted into the input boxes 55 is 100 %, and re-inputting the appropriate division rates is required. When an appropriate setting is configured, and the button 56 is pressed, the present screen image is switched to the subsequent data management setting screen image 50D as shown in Fig. 6.

Next, on the data management setting screen image 50D, it is determined whether the divided data files 1 and 2 are to be stored in a compressed form (S 107). In Fig. 6, "YES" is displayed as a box 57 for "VALID," yet it can be changed to "NO." Namely, "valid" or "invalid" can be selected depending on cases where a compressing process is performed or not. When a data file to be transferred is one scanned by the scanning unit 17 in the same manner as the present embodiment, it is efficient to reduce a data amount of the data file through the compressing process and transfer the compressed data file. However, when the client 3 or 4 transfers a data file as a data transfer device, the data file may have already been compressed. In this case, "NO" is selected for the box 57.

In the meantime, the stored data file can be accessed by the client 3 or 4 by acquiring the path name of the data management folder in which the data file is stored. Thereby, the data file can be read out, modified, or deleted. Furthermore, the stored data file may be not a file to be only referred to such as an image data file but an executable file such as an EXE file. When the data file is an executable file, the client 3 or 4 can utilize it. In S108, with respect to the stored data file, there are configured authorization levels regarding which device is authorized to read the data file (divided data files), which device is authorized to modify the data file (divided data files), and which device is authorized to execute the data file, respectively.

Each of the authorization levels defines a range of subject users which can utilize the stored data file for each data operation of reading, modifying, and executing. When the setting on the data management setting screen image 50D is completed, and a button 58 is pressed, the present screen image is switched to the next data management setting screen image 50E as shown in Fig. 7. The data management setting screen image 50E is provided with respective boxes 59 for setting the authorization levels of "READING," "MODIFYING," and "EXECUTING." In each of the boxes 59, for example, there can be selected "everyone" in which mode all the clients 3 and 4 are authorized, or "administrators" in which mode the client 3 of the administrator is authorized.

In the present embodiment, as shown in data management information 100 of Fig. 9, everyone (every client 3 or 4) is authorized to read the data file. Further, the administrator (client 3) is only authorized to modify the data file and to execute the data file.

Thereafter, a button 60 is pressed, and the present data management setting screen image 50E is switched to the subsequent data management setting screen image 50F as shown in Fig. 8. The data management setting screen image 50F is configured to set a storage area (destination) to store the data management information 100 created through the above setting operations. Therefore, in an input box 61 displayed on the screen image 50F, there is inputted a path for specifying a destination to store the data management information 100 (S109). For example, a path name "¥¥mfp¥datatable" as shown in Fig. 9 is set on the screen image 50F. Namely, the data management information 100 is stored in a storage means of the MFP 1.

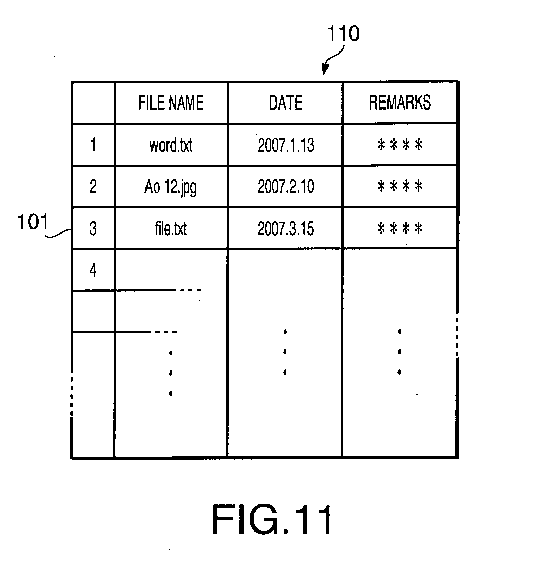

After the path name is set, a button 62 is pressed on the data management setting screen image 50F shown in Fig. 8. Then, there is displayed on the display-input unit 15, a transfer checking screen image (not shown) for checking whether the data file is transferred based on the created data management information 100 (S110). When a button "YES" is pressed on the transfer checking screen image (S110: Yes), the file selected in S 103 is divided into the divided data files 1 and 2 with the division rates configured in S106. Then, the divided data files 1 and 2 are transferred to and stored into the data management folders of the server 2 as specified in S105, respectively. Further, the data management information 100 shown in Fig. 9 is stored in the data table of the MFP 1 specified in S109 (S111). In the HDD 13 of the MFP 1, as shown in Fig. 11, there is established a database 110 provided with sections of a file name, configured date and time, and remarks column. Hence, the data management information 100 shown in Fig. 9 is saved as a file 101 on the database 110.

Meanwhile, when a button "NO" is pressed on the transfer checking screen image (S110: No), the data management information 100 created through the input settings configured until then is cleared. Then, the present process goes back to S101, in which a new input is waited for. In addition, when the data transfer is carried out (S111), the process goes back to S 101, in which a new input is waited for.

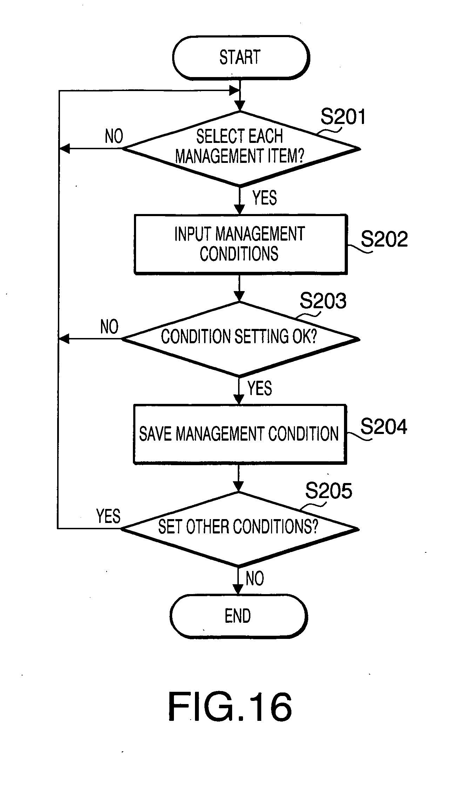

In the aforementioned process in which the data file is transferred and stored, the data management information 100 is created before the data file is transferred. However, in the MFP 1 of the present embodiment, management items such as the destination to store the data management information 100 can previously be configured. Fig. 16 is a flowchart showing a process executed with a permanent setting program. When configuring a permanent setting, a setting key of the display-input unit 15 is pressed to make a selection with respect to each of various management items displayed on the display-input unit 15 (S201: Yes). For example, when the data management information 100 is to be saved, a setting screen image is displayed as shown in Fig. 8. A destination to store the data management information is inputted in an input box 61 as a management condition (S202).

Subsequently, a setting check screen image is displayed on the display-input unit 15 (S203). When a button "YES" is pressed (S203: Yes), the destination to store the data management information 100 is saved and set in a memory (S204). Thus, when the destination to store the data management information 100 is set, for example, in S 109 shown in Fig. 15, the present screen image is switched to the data management setting screen image 50F shown in Fig. 8, and the destination to store the data management information 100 is displayed in the input box 61 on the data management setting screen image 50F.

Furthermore, when configuring other management items such as the division number, a condition setting confirmation screen image is displayed on the display-input unit 15 (S205). When a button "YES" is pressed here (S205: Yes), the present process goes back to S201. Then, another management item is selected (S201: Yes), similar operations are repeated. Specifically, a management condition is inputted in an input box on a setting screen image (S202). Then, when the condition setting is confirmed (S203: Yes), the management condition, such as the data division number, and the destinations and division rates of the divided data files, is stored in the memory and set (S204). Then, when a button "NO" is pressed on the condition setting confirmation screen image (S205: No), the permanent setting is terminated.

For example, when acquiring data such as facsimile data, the management conditions configured in the permanent setting are read out from the memory, and the acquired data are divided, transferred, and stored in accordance with the management conditions. In addition, the permanent setting may be utilized as a default setting when the data transfer program is executed as shown in Fig. 15. Specifically, the acquired data are once saved in the MFP 1. Then, the data are transferred as divided data files in response to a user key operation. At this time, although the input setting operations of S104 to S109 are performed, the management conditions configured in the permanent setting are automatically inputted in case where no user key operation is provided. Then, according to the management conditions as inputted, divided data files are generated and stored.

The data files stored in the server 2 based on the data management information 100 can be accessed and referred to by the clients 3 and 4 connected with the server 2 via the LAN 6. Specifically, each of the clients 3 and 4, which has a data referring program therein, can access the MFP 1 and search a data file in the database 110 stored in the MFP 1. Then, for example, when the client 3 or 4 selects the file 101 from the database 110 (see Fig. 11) and issue a reference request for referring to the file 101, the path names of the data management folders in which the file with the file name "file.txt" is stored in a divided state are informed of by the MFP 1 based on the data management information 100 of the file 101. Then, the client 3 or 4 accesses the server 2 in accordance with the path names, and acquires the divided files of the file "file.txt" from the data management folders. By restoring the file "file.txt" based on the divided files as acquired, the file "file.txt" comes to be utilizable.

In this case, the client 3 or 4 can utilize the data file in accordance with the authorization levels thereof. In case of the data management information 100 shown in Fig. 9, the client 3 of the administrator is authorized to perform all operations of reading, modifying, and executing the data file, while the client 4 as a general client is authorized only to read the data file.

As described above, according to the network system of the present embodiment, the divided data files 1 and 2, into which the original data file is divided based on the data management information 100 (see Fig. 9) generated by the MFP 1, are transferred to and stored in respective different folders as shown in Fig. 10. Hence, since a single data file is divided, the combination of divided data files has to be found to obtain the complete original data file. Therefore, it is hard to utilize the whole data file in case of unauthorized data access. Further, as the data file is divided into a more number of divided data files, a greater effect on such unauthorized data access can be provided. Additionally, when part of the divided data files is stored in a hidden folder, it can make it harder to utilize the whole data file through the unauthorized data access.

In the example shown in Fig. 10, both the divided data files 1 and 2 are stored in the server 2. However, as shown in Fig. 12, when the divided data file 1 is stored in the client 3 of the administrator, it can further make it harder to find the divided data file 1 through the unauthorized data access. This is because even though the server 2 is accessed in an unauthorized manner, since there is part of the divided data files in the server 2, it is difficult to further penetrate other terminal devices and search the rest of the divided data files. Especially, when the administrator is absent and the client 3 is not booted, it is difficult even to penetrate the client 3.

On the other hand, according to the network system of the present embodiment, the client 3, which is authorized to modify the data file based on the authorization levels thereof, might mistakenly delete the data file during an operation of modifying the data file. However, since the data file is divided and the divided data files are stored in respective different folders, even though one of the divided data files is deleted, there is less risk that all of the divided data files will be lost. Hence, in the present embodiment, the original data file is more likely to be protected with higher confidentiality.

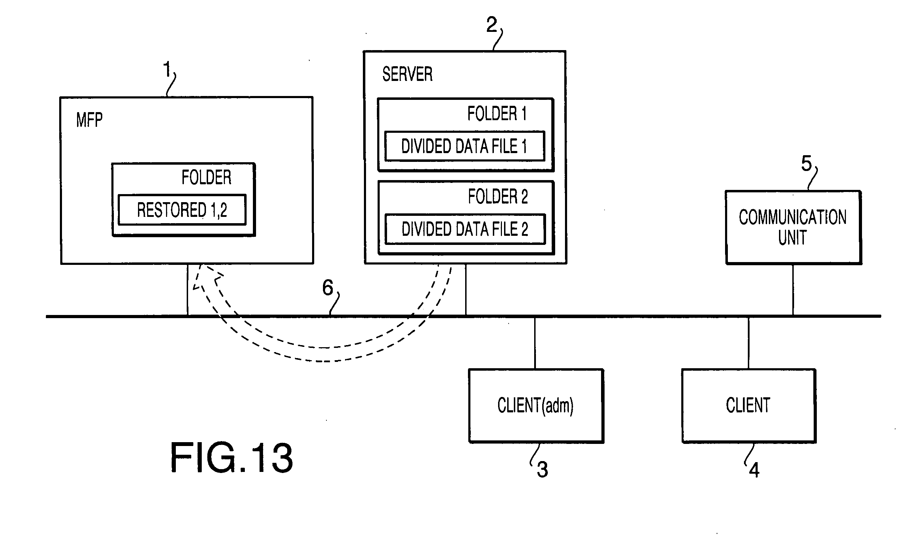

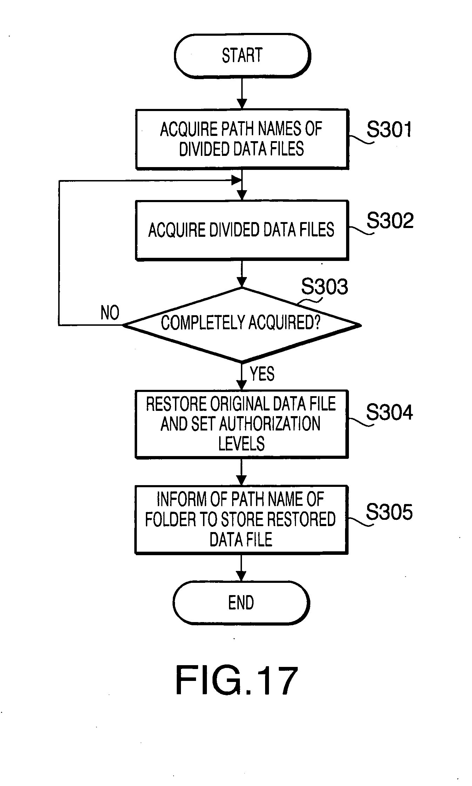

In the meantime, to utilize the stored data file with the client 3 or 4, as described above, it is required to access the database 110 in the MFP 1, issue the reference request for referring to the file of the data management information 100, receive the information regarding the path names of the data management folders, and access the divided data files stored in the data management folders of the server 2. However, otherwise, for example, when accessing the database 110 of the MFP 1 from the client 3 or 4 and issuing a reference request, the MFP 1 may restore the data file as shown in Fig. 13 and allow the client 3 or 4 to refer to the restored data file. Fig. 17 is a flowchart showing a process to be executed with a data restoring program.

The MFP 1, which has received the reference request from the client 3 or 4, acquires the path names of the divided data files 1 and 2 based on the data management information 100 (S301). Then, based on the path names, the MFP 1 accesses the server 2 to acquire the divided data files 1 and 2 (S302). During the acquiring operation, it is judged whether the divided data files 1 and 2 are completely acquired (S303). When the acquisition of the divided data files 1 and 2 is completed (S303: Yes), the original data file is restored with the acquired divided data files 1 and 2, and the authorization levels are set for the restored data file based on the data management information 100 (S304). Then, MFP 1 saves a copy of the restored data file in a folder generated on the RAM 12 (see Fig. 1) thereof, and informs of a path name of the generated folder of the client 3 or 4 (S305). Thereby, when accessing the MFP 1, the client 3 or 4 can refer to the desired data file. It is noted that the restored data file may be generated with the divided data files 1 and 2 being read out in a state still stored in the server 2. Further, the restored data file generated in the MFP 1 may be sent to the client 3 or 4 as a requesting source.

Thus, when a copy of the data file restored based on the divided data files stored in the server 2 is generated in the MFP 1, even though the data file is mistakenly deleted during the operation of modifying the data file, since the original data file is left in the server 2, the original data file can be protected with higher confidentiality. In addition, since a copy of the data file restored based on the divided data files is generated, referring to the data file stored can be done more conveniently. Further, since the data file is referred to without the path names of the divided data files being informed of, it can be avoided that the original data file is falsified even through unauthorized access to the database 110.

Additionally, in the present embodiment, the destination to store the data management information 100 is determined to be the MFP 1. However, a path name "¥¥adm¥datatable" may be inputted into the input box 61 shown in Fig. 8 such that the management information 100 can be stored in a database established in the client 3 of the administrator. In this case, when the client 3 is powered off, unauthorized access to the database is prevented. Furthermore, the network system may be configured such that, by installing a program for editing the database in the client 3, the administrator can modify the authorization levels or determine a period during which the data file can be referred to depending on what kind of data the data file is.

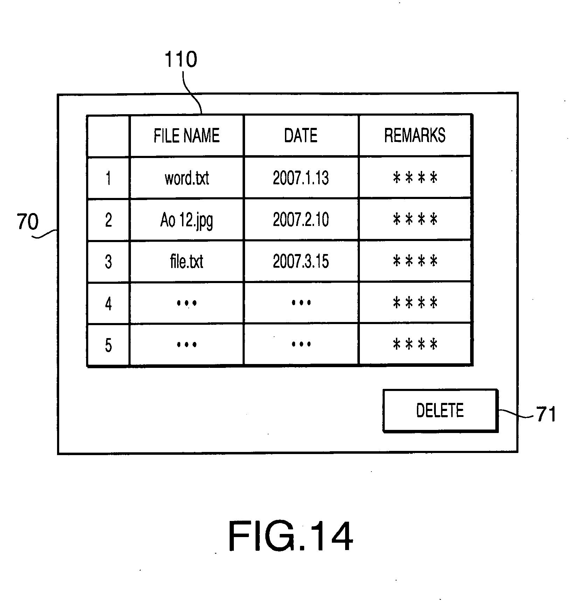

Meanwhile, the data management information 100 stored in the database established in the MFP 1 or client 3 can be deleted in a following procedure. The "DELETE" 45 is selected on the operation selecting screen image 40 shown in Fig. 2. When the "DELETE" 45 is selected, for example, a deletion screen image 70 as shown in Fig. 14 is displayed. Here, the database 110 is shown on the deletion screen image 70. Then, when a predetermined file is selected from the database 110, and a "DELETE" button 71 is pressed, a file to be deleted is determined. Thereby, the file stored in the database 110 is deleted, and divided data files stored in the server 2 or the like can be deleted based on path names for the divided data files. Therefore, it is possible to perform both operations of storing and deleting a file, a storage area of the storage means can efficiently be utilized by leaving only necessary files therein.

In the meantime, in the present embodiment, the explanation regarding the image data scanned by the scanner has been given. However, a data file, which is generated by the client 3 or 4, may be saved in a USB memory and transmitted to the MFP 1, and then divided data files, into which the data file is divided in the MFP 1, may be stored in the server 2 or the like. In addition, as described above, with the data management program being installed in the client 3 or 4, a data file may be generated and divided into divided data files by the client 3 or 4 such that the divided data files can be stored in the server 2 or the like. In this case, for example, the data file may be divided such that a critical portion thereof can be specified as a divided file with a small division rate. Further, when the critical portion specified as a divided file with a small division rate is stored in the client 3 of the administrator, the data file can be protected against unauthorized access with higher confidentiality.

In the present embodiment, the division rates of the divided data files to be stored are adjusted such that a large data amount of divided data file is stored in the server 2 with a large capacity and a small data amount of divided data file is stored in the MFP 1 or client 3. It is noted that a data storing device may be any of various storage device such as a PC and HDD connected with the MFP 1 via a USB cable, instead of the server 2 connected with the MFP 1 via a network such as the LAN 6. In addition, the client 3 or 4 may be not only a device connected with the MFP 1 via the LAN 6 but also a device connected with the MFP 1 via a USB cable that is configured to issue a data request to the MFP 1. Furthermore, the data management information (more specifically, the path names of the divided data files included in the data management information) is transmitted in response to the reference request received from the client 3 or 4 in the present embodiment, yet the data management information may be transmitted to a previously-set client in response to the divided data files and the data management information being saved.

Hereinabove, the embodiments according to aspects of the present invention have been described. The present invention can be practiced by employing conventional materials, methodology and equipment. Accordingly, the details of such materials, equipment and methodology are not set forth herein in detail. In the previous descriptions, numerous specific details are set forth, such as specific materials, structures, chemicals, processes, etc., in order to provide a thorough understanding of the present invention. However, it should be recognized that the present invention can be practiced without reapportioning to the details specifically set forth. In other instances, well known processing structures have not been described in detail, in order not to unnecessarily obscure the present invention.

Only exemplary embodiments of the present invention and but a few examples of its versatility are shown and described in the present disclosure. It is to be understood that the present invention is capable of use in various other combinations and environments and is capable of changes or modifications within the scope of the inventive concept as expressed herein.

For example, the information processing device may be configured such that a request for deleting a divided data file is not accepted, even though such a request is sent by the terminal device. In this case, the information processing device may be configured to delete all divided data files managed based on data management information, only when receiving a request for deleting a data file managed based on the data management information. According to the above configuration, it can be prevented that part of the divided data files is deleted and thereby an original data file thereof can no longer be restored and accessed.

## Claims

1. An information processing device connectable with a data storage device and data management device, comprising:
a data dividing means configured to divide a first data file into a plurality of second data files;
a management information creating means configured to create management information regarding the plurality of second data files;
a data storing means configured to store the plurality of second data files into the data storage device; and
a management information storing means configured to store the management information created by the management information creating means into the data management device.

2. The information processing device according to claim 1, which is configured to be accessible from a terminal device, the information processing device further comprising:
a request receiving means configured to receive a request issued by the terminal device to refer to the first data file;
a management information acquiring means configured to acquire the management information from the data management device in response to the request received by the request receiving means;
a data acquiring means configured to acquire the plurality of second data files stored in the data storage device, based on the management information acquired by the management information acquiring means;
a data restoring means configured to restore the first data file with the plurality of second data files acquired by the data acquiring means, based on the management information;
a restored data storing means configured to store therein the first data file restored by the data restoring means; and
an informing means configured to inform the terminal device of a location to store the first data file as restored.

3. The information processing device according to claim 1, which is configured to be accessible from a terminal device, the information processing device further comprising:
a request receiving means configured to receive a request issued by the terminal device to refer to the first data file;
a management information acquiring means configured to acquire the management information from the data management device in response to the request received by the request receiving means;
a data acquiring means configured to acquire the plurality of second data files based on the management information acquired by the management information acquiring means;
a data restoring means configured to restore the first data file with the plurality of second data files acquired by the data acquiring means, based on the management information;
a restored data storing means configured to store therein the first data file restored by the data restoring means; and
a restored data sending means configured to send the first data file as restored to the terminal device.

4. The information processing device according to claim 1, which is configured to be accessible from a terminal device, the information processing device further comprising:
a request receiving means configured to receive a request issued by the terminal device to refer to the management information;
a management information acquiring means configured to acquire the management information from the data management device in response to the request received by the request receiving means; and
a management information sending means configured to send the management information acquired by the management information acquiring means.

5. The information processing device according to any preceding claims,
wherein the data storage device includes a plurality of data storage devices, and
wherein the data storing means stores each of the plurality of second data files in a separate one of the plurality of data storage devices.

6. The information processing device according to any preceding claims, further comprising a division rate setting means configured to set respective division rates of the plurality of second data files at which the first data file is divided into the plurality of second data files by the data dividing means.

7. The information processing device according to claim 6,
wherein the management information includes the respective division rates of the plurality of second data files as set by the division rate setting means.

8. The information processing device according to any preceding claims,
wherein the data management device includes a plurality of data management devices communicably connected with the information processing device,
wherein the information processing device further comprises a specifying means configured to specify one of the plurality of data management devices to store therein the management information, and
wherein the management information storing means stores the management information in the specified one of the plurality of data management devices.

9. The information processing device according to any preceding claims, further comprising a compressing setting means configured to determine whether the plurality of second data files are to be stored in a compressed form.

10. The information processing device according to claim 1,
wherein the management information includes information regarding whether the plurality of second data files are to be stored in a compressed form.

11. The information processing device according to any preceding claims, further comprising an authorization level setting means configured to set an authorization level representing which terminal device is authorized to perform each operation of reading, modifying, executing the first data file.

12. The information processing device according to claim 11,
wherein the management information includes the authorization level representing which terminal device is authorized to perform each operation of reading, modifying, executing the first data file.

13. The information processing device according to any preceding claims,
wherein the management information includes a path names representing where each of the plurality of second data files is stored.

14. The information processing device according to claim 13,
wherein the management information further includes at least one of a file name thereof, a location to store the management information, and a numerical number of the plurality of second data files.

15. The information processing device according to any preceding claims,
wherein the data management device includes one of an internal device and an external device of the information processing device.

16. A network system, comprising:
an information processing device;
a data storage device connected with the information processing device;
a data management device connected with the information processing device; and
a terminal device connected with the information processing device via a network,
wherein the information processing device comprises:
a data dividing means configured to divide a first data file into a plurality of second data files;
a management information creating means configured to create management information regarding the plurality of second data files;
a data storing means configured to store the plurality of second data files into the data storage device; and
a management information storing means configured to store the management information created by the management information creating means into the data management device.

17. The network system according to claim 9,
wherein the information processing device further comprises:
a request receiving means configured to receive a request issued by the terminal device to refer to the first data file;
a management information acquiring means configured to acquire the management information from the data management device in response to the request received by the request receiving means;
a data acquiring means configured to acquire the plurality of second data files stored in the data storage device, based on the management information acquired by the management information acquiring means;
a data restoring means configured to restore the first data file with the plurality of second data files acquired by the data acquiring means, based on the management information;
a restored data storing means configured to store therein the first data file restored by the data restoring means; and
an informing means configured to inform the terminal device of a location to store the first data file as restored, and
wherein the terminal device comprises:
a request issuing means configured to issue a request for referring to the first data file to the information processing device; and
a receiving means configured to receive the location to store the first data file as restored that has been informed of by the informing means
a terminal-device-side data acquiring means configured to acquire the first data file based on the location to store the first data file received by the receiving unit.

18. The network system according to claim 9,
wherein the information processing device further comprises:
a request receiving means configured to receive a request issued by the terminal device to refer to the first data file;
a management information acquiring means configured to acquire the management information from the data management device in response to the request received by the request receiving means;
a data acquiring means configured to acquire the plurality of second data files stored in the data storage device, based on the management information acquired by the management information acquiring means;
a data restoring means configured to restore the first data file with the plurality of second data files acquired by the data acquiring means, based on the management information;
a restored data storing means configured to store therein the first data file restored by the data restoring means; and
a restored data sending means configured to send the first data file as restored to the terminal device, and
wherein the terminal device comprises:
a request issuing means configured to issue a request for referring to the first data file to the information processing device; and
a receiving means configured to receive the first data file as restored that has been sent by the restored data sending means.

19. The network system according to claim 9,
wherein the information processing device further comprises:
a request receiving means configured to receive a request issued by the terminal device to refer to the management information;
a management information acquiring means configured to acquire the management information from the data management device in response to the request received by the request receiving means; and
a management information sending means configured to send the management information acquired by the management information acquiring means, and
wherein the terminal device comprises:
a request issuing means configured to issue a request for referring to the management information;
a management information receiving means configured to receive the management information sent by the management information sending means;
a data acquiring means configured to acquire the plurality of second data files stored in the data storage device, based on the management information received by the management information receiving means; and
a data restoring means configured to restore the first data file with the plurality of second data files acquired by the data acquiring means, based on the management information.

20. A method applicable to an information processing device, comprising:
a first step of dividing a first data file into a plurality of second data files;
a second step of creating management information regarding the plurality of second data files generated in the first step;
a third step of storing the plurality of second data files into the data storage device; and
a fourth step of storing the management information created in the second step into the data management device.

21. A computer program to be executed by a computer, the computer program containing instructions that cause the computer to perform the method according to claim 20.
